# FASCICULE DE BREVET EUROPEEN

(11) **EP 3 123 584 B1**
(45) Date de publication et mention de la délivrance du brevet: **15.07.2020**
(21) Numéro de dépôt: 15717026.7
(22) Date de dépôt: 20.03.2015
(51) Int. Cl.: H02J 3/14, H04L 12/28

(54) **PROCÉDÉ DE GESTION DE LA CONSOMMATION ÉLECTRIQUE D'UNE PLURALITÉ D'ÉQUIPEMENTS DOMESTIQUES D'UN RÉSEAU DE COMMUNICATION LOCAL**
VERFAHREN ZUM VERWALTEN DES ELEKTRIZITÄTSVERBRAUCHS MEHRERE HAUSHALTSVORRICHTUNGEN EINES ÖRTLICHEN KOMMUNIKATIONSNETZWERKS
METHOD FOR MANAGING THE ELECTRICITY USE OF A PLURALITY OF HOUSEHOLD APPLIANCES OF A LOCAL COMMUNICATION NETWORK

(30) Priorité: 27.03.2014 FR 1452655
(43) Date de publication de la demande: 01.02.2017
(73) Titulaire: ORANGE, 75015 Paris (FR)
(72) Inventeur: FONTAINE, Fabrice, F-35850 Geveze (FR); YAN, Han, F-92800 Puteaux (FR)
(74) Mandataire: Regimbeau
(86) Numéro de dépôt international: PCT/FR2015/050712
(87) Numéro de publication internationale: WO 2015/145048

(56) Documents cités:
- EP-A2- 2 647 756
- US-A1- 2010 060 079
- US-A1- 2012 147 802
- US-A1- 2013 030 590
- US-A1- 2013 131 883

## Description

### DOMAINE TECHNIQUE GENERAL

L'invention a pour objet l'optimisation énergétique, et concerne plus précisément une solution de contrôle de la puissance électrique maximale consommée par une pluralité d'équipements domestiques connectés au sein d'un réseau de communication local.

### ETAT DE LA TECHNIQUE

Usuellement, un foyer comporte de nombreux équipements domestiques susceptibles de consommer une puissance électrique notable, tels que des équipements d'électroménager comme un lave-vaisselle, un lave-linge ou encore un sèche-linge. De tels équipements consomment de l'électricité de manière irrégulière suivant différentes phases de fonctionnement. Si un utilisateur décide de faire fonctionner plusieurs équipements domestiques en même temps, la consommation électrique de ceux-ci s'additionne. Un tel fonctionnement concomitant de plusieurs appareils gourmands en énergie produit alors un pic de consommation, potentiellement important si les phases de fonctionnement des différentes machines en fonctionnement maximisent la puissance consommée au même instant. Un tel pic de consommation est souvent constaté en début de soirée, lorsqu'un individu de retour du travail lance en même temps des phases de fonctionnement de plusieurs équipements électroménagers de son foyer.

Malheureusement, le même comportement peut être observé chez une majorité des individus. Les pics de consommation électrique domestique décrits ci-dessus sont alors constatés dans une majorité de foyers, ce qui génère un pic de consommation nationale. Un tel pic peut être très dommageable si la puissance totale appelée par les équipements dépasse la puissance instantanée pouvant être délivrée sur le réseau par les équipements de production d'électricité qui y sont connectés. Le réseau électrique risque alors en effet de tomber, entraînant une coupure de l'alimentation électrique d'une région entière, voire une coupure nationale. Outre le désagrément causé aux personnes concernées, une telle coupure peut être la cause de dommages importants, et provoquer par exemple le décès de personnes nécessitant des soins médicaux urgents, ou bien des accidents causés par des moyens de chauffage ou d'éclairage de substitution comme des intoxications au monoxyde de carbone ou des incendies causés par des bougies ou feux de cheminée.

Une première solution existante pour diminuer de tels pics de consommation consiste à inciter l'utilisateur des équipements domestiques à ne pas dépasser une consommation électrique maximale, comme le fait le programme « Ecowatt » en France. De même l'utilisateur peut être incité à consommer davantage au cours des jours et des périodes de la journée présentant une faible consommation générale, si besoin par le biais de tarifs plus avantageux comme dans le cadre des contrats « heures pleines-heures creuses » et « Tempo » d'EDF en France ou des contrats proposés par Ontario Electricity Board aux USA. Néanmoins, si une telle solution repose uniquement sur la bonne volonté de l'utilisateur ses résultats sont fortement aléatoires et nécessitent une action de la part de l'utilisateur.

D'autres solutions limitent la puissance électrique pouvant être appelée de manière contraignante, par exemple en imposant une valeur seuil de consommation à ne pas dépasser. Une telle limitation peut s'accompagner d'une liste d'équipements domestiques prioritaires et imposer la coupure des équipements non prioritaires sur des plages de temps prédéfinies ou bien en cas de dépassement de cette valeur seuil. Néanmoins, de telles solutions peuvent dégrader considérablement les performances des équipements et donc l'expérience utilisateur, par exemple si un équipement est coupé brutalement en plein milieu d'un cycle de lavage.

Il existe donc un besoin d'une solution permettant de limiter la consommation électrique maximale totale ou pic de consommation d'une pluralité d'équipements domestiques sans nécessiter d'action de la part de l'utilisateur de ces équipements et sans dégrader les performances de ces équipements. Le document US 2012/147802 divulgue le préambule de la revendication 1.

### PRESENTATION DE L'INVENTION

La présente invention se rapporte ainsi selon un premier aspect à un procédé de gestion de la consommation électrique d'une pluralité d'équipements domestiques connectés au sein d'un réseau de communication local, le fonctionnement dau moins deux équipements domestiques présentant une ou plusieurs phases de fonctionnement, selon la revendication 1.

Un tel procédé permet de minimiser la puissance maximale consommée par un ensemble d'équipements sans nécessiter d'actions de la part de l'utilisateur ni dégrader la qualité des services rendus par ces équipements.

Le module de traitement peut acquérir les informations relatives à des phases de fonctionnement en cours ou à venir d'équipements domestiques, après le démarrage par un desdits équipements domestiques d'une nouvelle phase de fonctionnement ou la mise en pause par l'utilisateur d'une phase de fonctionnement.

Ceci permet au module de traitement de maintenir à jour ses prévisions de consommation suite à la survenance d'un événement tel que le démarrage d'une phase de fonctionnement ou la mise en pause par un utilisateur d'une phase de fonctionnement.

Afin de prendre en compte les mises à jour de la consommation prévisionnelle réalisées par un équipement au cours d'une phase de fonctionnement, le module de traitement de données peut également acquérir de manière répétée les informations relatives à des phases de fonctionnement d'équipements domestiques.

Dans un mode de mise en œuvre du procédé selon le premier aspect, les informations relatives à une phase de fonctionnement d'un équipement domestique peuvent comprendre une durée maximale d'interruption de ladite phase et ledit module de traitement peut alors interrompre ladite phase de fonctionnement déterminée pendant une durée d'interruption inférieure ou égale à la durée maximale d'interruption.

Ce mode de mise en œuvre permet de garantir que la durée d'interruption programmée d'une phase de fonctionnement d'un équipement ne dégradera pas la qualité du service rendu à l'utilisateur par cet équipement.

Ledit module de traitement peut interrompre ladite phase de fonctionnement déterminée pendant une durée d'interruption égale à la durée du pic de consommation, lorsque la durée maximale d'interruption est supérieure ou égale à la durée du pic de consommation.

Ceci permet de décaler suffisamment dans le temps la consommation d'énergie par l'équipement pour diminuer la consommation totale d'énergie durant toute la durée du pic de consommation précédemment estimé.

Ledit module de traitement peut interrompre ladite phase de fonctionnement déterminée pendant une durée d'interruption égale à la durée maximale d'interruption lorsque la durée d'interruption maximale est inférieure à la durée du pic de consommation.

Ceci permet de réduire au maximum la durée du pic de consommation sans altérer le service rendu par l'équipement dont une des phases est interrompue.

Dans une variante de mise en œuvre du procédé selon le premier aspect, le module de traitement de données peut déterminer au moins une phase de fonctionnement d'un desdits équipements à interrompre de sorte à minimiser en outre la durée d'interruption des phases de fonctionnement des équipements domestiques.

Cette variante permet de minimiser le désagrément causé à l'utilisateur par la mise en œuvre du procédé en retardant au minimum la fin d'exécution de la dernière phase de fonctionnement de l'équipement dont une phase de fonctionnement est interrompue.

En outre, préalablement à l'étape de détermination d'au moins une phase de fonctionnement à interrompre, le module de traitement de données peut comparer l'amplitude du pic de consommation à un seuil prédéterminé.

Ceci permet de ne pas mettre en œuvre d'interruption de phase si la consommation totale maximale reste suffisamment faible afin de ne pas retarder l'exécution des phases de fonctionnement sans réel besoin.

Le module de traitement peut enfin programmer l'interruption de ladite phase de fonctionnement à un instant ultérieur.

Ceci permet de programmer une interruption de phase à un instant ultérieur si une telle interruption future est plus intéressante qu'une interruption immédiate du point de vue de la minimisation du pic de consommation.

Selon un deuxième aspect, l'invention concerne un module de traitement de données susceptible d'être connecté à un réseau de communication local selon la revendication 9.

Selon un troisième aspect, l'invention concerne une passerelle comprenant un module de traitement de données selon le deuxième aspect.

Selon un quatrième aspect, l'invention concerne un système de gestion de la consommation électrique comprenant une pluralité d'équipements domestiques connectés au sein d'un réseau de communication local et une passerelle selon le troisième aspect.

Enfin, selon un cinquième aspect, l'invention concerne un produit programme d'ordinateur comprenant des instructions de code pour l'exécution d'un procédé de gestion de la consommation électrique d'une pluralité d'équipements domestiques selon le premier aspect lorsque ce programme est exécuté par un processeur.

De tels module de traitement, passerelle, système de gestion et produit programme d'ordinateur présentent les mêmes avantages que ceux évoqués pour le procédé selon le premier aspect.

### PRESENTATION DES FIGURES

D'autres caractéristiques et avantages de la présente invention apparaîtront à la lecture de la description qui va suivre d'un mode de réalisation de l'invention. Cette description sera donnée en référence aux dessins annexés dans lesquels :
- la figure 1 représente un système de gestion de la consommation électrique d'une pluralité d'équipements domestiques selon un mode de réalisation de l'invention ;
- la figure 2 illustre les différentes phases de fonctionnement d'une machine à laver;
- les figures 3a, 3b, 3c et 3d illustrent les différentes phases de fonctionnement de différents types de lave-vaisselle;
- les figures 4a, 4b, 4c, 4d illustrent une mise en œuvre d'un procédé de contrôle de la consommation électrique d'équipements domestique pour un système comprenant un lave-vaisselle et un lave-linge;
- la figure 5 est un diagramme schématisant une mise en œuvre d'un procédé de gestion de la consommation électrique d'une pluralité d'équipements domestiques selon l'invention ;
- la figure 6 est un diagramme schématisant une mise en œuvre de l'étape de détermination d'une phase de fonctionnement à interrompre selon l'invention ;
- la figure 7 illustre l'effet d'un démarrage séquentiel d'équipements domestiques sur la puissance totale consommée.

### DESCRIPTION DETAILLEE

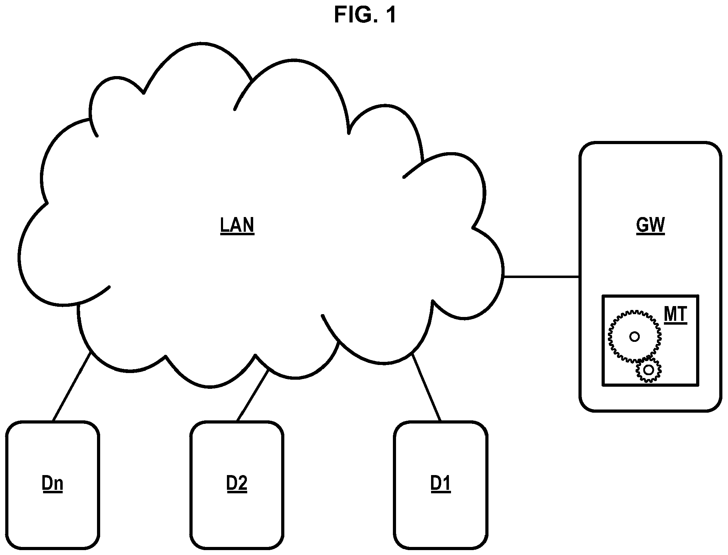

En référence à la **figure 1****,** un mode de réalisation de l'invention concerne un système de gestion de la consommation électrique comprenant une pluralité d'équipements domestiques D1, D2, ..., Dn connectés au sein d'un réseau de communication local LAN.

Par réseau de communication local, on entend un réseau de type LAN (« Local Access Network »). Ce réseau peut être en particulier un réseau domestique ou un réseau d'entreprise, et est le plus souvent centré sur une passerelle, qui est en particulier un boitier d'accès à Internet (une « box ») du foyer ou de l'entreprise.

Le réseau peut être aussi bien un réseau filaire de type Ethernet, selon la norme IEEE 802.3, qu'un réseau sans fil de type Wi-Fi, selon la norme IEEE 802.11, ou 3G ou bien une combinaison des deux. La liaison peut être directe, ou utiliser un équipement intermédiaire tel que des boitiers CPL.

Les équipements domestiques D1 à Dn peuvent être n'importe quel équipement domestique, disposant d'une connexion réseau filaire ou sans-fil.

Par exemple, ces équipements domestiques peuvent être des équipements électroménager tels qu'un lave-vaisselle, un sèche-linge, une machine à laver, un réfrigérateur, un congélateur etc.

Ces équipements domestiques présentent au cours de leur fonctionnement une ou plusieurs phases de fonctionnement.

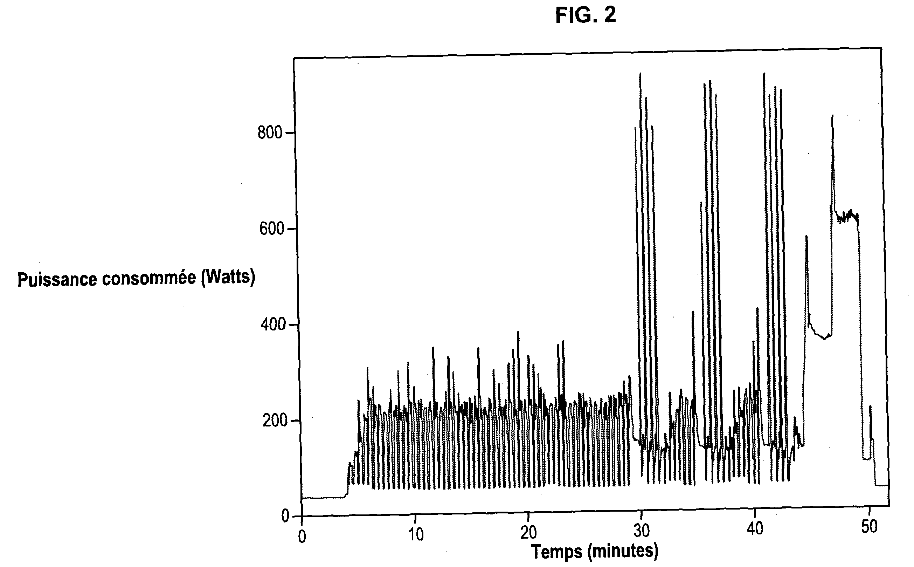

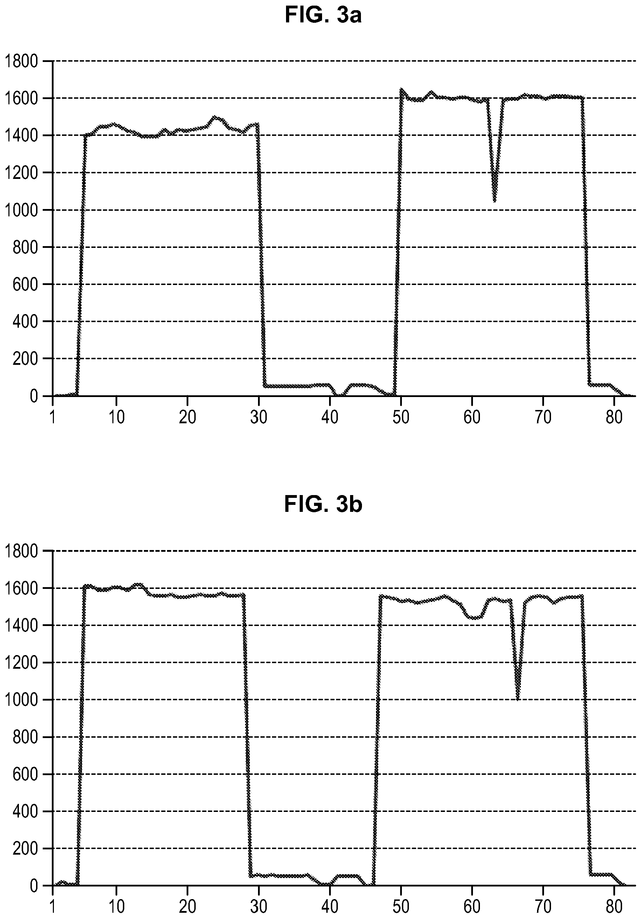

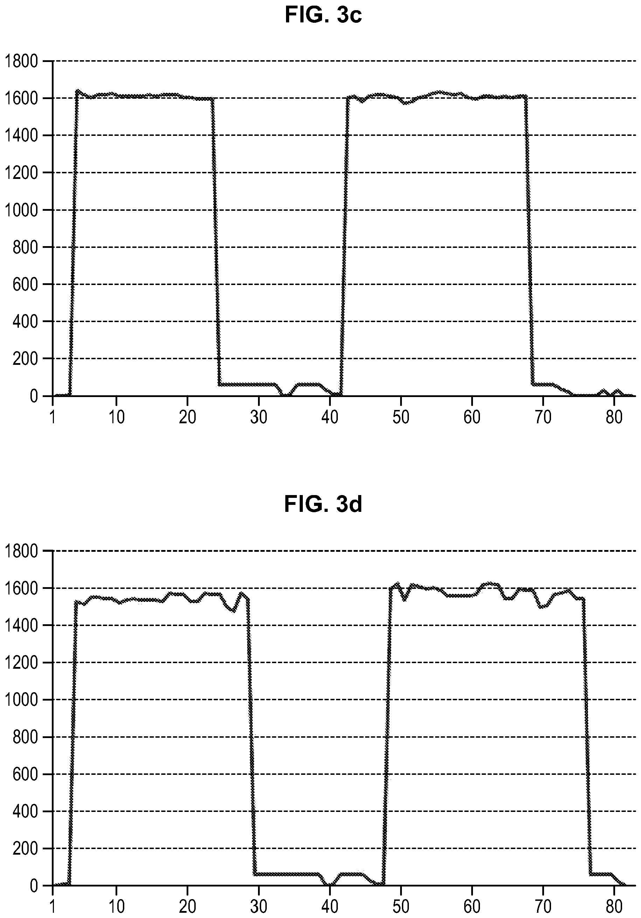

A titre de premier exemple et comme illustré en **figure 2****,** une machine à laver présente une phase de lavage puis une phase d'essorage. A titre de deuxième exemple et comme illustré en **figures 3a, 3b****,** **3c, 3d****,** un lave-vaisselle présente une phase de premier lavage, une phase de pause, une phase de deuxième lavage et une phase de séchage.

A chaque phase de fonctionnement d'un équipement domestique peut être associée une puissance consommée, telle que la puissance maximale consommée, par ledit équipement domestique durant cette phase. En variante à chaque phase peut être associée la puissance moyenne consommée par ledit équipement. A chaque phase de fonctionnement d'un équipement peut également être associée une durée de la phase.

Ainsi à titre de premier exemple et comme illustré en **figure 2****,** une machine à laver peut présenter une première phase de fonctionnement correspondant à une phase de lavage d'une durée de 25 minutes avec une puissance consommée de 400 Watt ainsi qu'une deuxième phase de fonctionnement correspondant à une phase d'essorage d'une durée de 30 minutes avec une puissance consommée de 1000 Watt.

A titre de deuxième exemple et comme illustré en **figure 3a****,** un lave-vaisselle peut présenter une première phase de fonctionnement correspondant à un premier lavage d'une durée de 25 minutes avec une puissance consommée de 1400 Watt, une deuxième phase de fonctionnement d'une durée de 20 minutes avec une puissance consommée de 50 Watt correspondant à une phase de pause, une troisième phase de fonctionnement correspondant à une phase de deuxième lavage d'une durée de 30 minutes avec une puissance consommée de 1600 Watt et une quatrième phase de fonctionnement correspondant à une phase de séchage d'une durée de 5 minutes avec une puissance consommée de 50 Watt.

Enfin, à chaque phase peut être associée une durée d'interruption maximale correspondant à la durée maximale pendant laquelle la phase peut être interrompue sans nuire à la qualité du service rendu par l'équipement exécutant cette phase de fonctionnement. Certaines phases de certains équipements domestiques peuvent avoir une durée d'interruption maximale égale à 0 si les phases de ces équipements ne peuvent être interrompues sans nuire à la qualité du service rendu.

A titre de premier exemple, la durée d'interruption maximale de la phase de lavage de la machine à laver peut être de 0 minute alors que la durée d'interruption maximale de la phase d'essorage de la machine à laver peut être de 20 minutes. En effet interrompre une machine à laver pendant la phase de lavage entraine un refroidissement de l'eau, risquant de donner une odeur désagréable au linge.

A titre de deuxième exemple, pour un lave-vaisselle dont les phases de fonctionnement sont illustrées en **figure 3a****,** la durée d'interruption maximale de la phase de premier lavage peut être de 20 minutes, celle de la phase de pause peut être de 20 minutes, celle de la phase de deuxième lavage peut être de 20 minutes, et celle de la phase de séchage peut être de 0 minute.

Le système comprend également un module de traitement de données MT susceptible d'être connecté au réseau LAN et configuré pour gérer la consommation électrique desdits équipements domestiques D1 à Dn. Le module de traitement de données peut être intégré dans un équipement dédié, ou bien dans un des équipements D1 à Dn du réseau, en particulier dans la passerelle GW du réseau.

La passerelle GW du réseau ou « box » est par définition le cœur d'un réseau de communication local. Tous les autres équipements du réseau lui sont reliés et elle échange déjà des messages avec ces équipements de par sa fonction de routage. Cet équipement est en effet celui qui contrôle le réseau, et a donc naturellement une position de coordinateur. De plus, il est bien moins souvent éteint que les autres car il assure souvent la connectivité à Internet 24h/24. Elle dispose par ailleurs généralement déjà de moyens de traitement suffisants pour réaliser les opérations effectuées par le module de traitement de données. C'est ainsi le meilleur équipement pour la gestion de la consommation électrique des autres équipements du réseau.

Dans une variante, le module de traitement de données MT est intégré à un équipement externe au réseau local, tel qu'un équipement d'un fournisseur de service, par exemple un équipement du fournisseur d'électricité de l'utilisateur des équipements D1 à Dn.

Pour gérer la consommation électrique des équipements domestiques, le module de traitement de données acquiert tout d'abord des informations relatives à des phases de fonctionnement en cours ou à venir pour au moins deux équipements domestiques. Ces équipements sont des équipements domestiques mis en marche par l'utilisateur dont le fonctionnement va passer par une ou plusieurs phases présentant potentiellement chacune une consommation électrique différente. Les informations acquises par le module de traitement et relatives à une phase de fonctionnement pour un équipement domestique comprennent notamment la puissance consommée par ledit équipement domestique durant cette phase.

Le module de traitement MT tente ensuite de minimiser la puissance maximale totale consommée par lesdits au moins deux équipements domestiques, dite pic de consommation, à partir des informations acquises. Pour cela, le module de traitement MT peut estimer la puissance totale qui sera consommée par l'ensemble de ces équipements au gré de leurs différentes phases de fonctionnement en cumulant la puissance consommée par chaque équipement pour lequel le module de traitement a acquis des informations ; puis le module de traitement MT détermine au moins une phase de fonctionnement d'un desdits équipements à interrompre de sorte à minimiser le pic de consommation. En interrompant le fonctionnement d'un des équipements pendant un certain temps, la consommation électrique de cet équipement est différée, sans modifier le service rendu à l'utilisateur puisque la phase de fonctionnement interrompue est ensuite reprise pour arriver à son terme. Un tel décalage dans le temps de la consommation électrique d'un équipement domestique peut permettre de diminuer la consommation électrique totale de l'ensemble des équipements durant au moins une partie du pic de consommation, réduisant alors la durée de celui-ci. Si la consommation totale des équipements est diminuée durant la totalité de la durée du pic de consommation, l'amplitude de ce pic sera diminuée. Il est alors possible que l'instant de consommation totale maximale au cours des phases de fonctionnement à venir des divers équipements en fonctionnement soit modifié, définissant ainsi un nouveau pic de consommation d'amplitude moindre que celui estimé précédemment. Lors de cette étape du procédé, le module de traitement doit donc déterminer, parmi les équipements au sujet desquels il dispose d'informations, quel équipement doit voir son fonctionnement interrompu et quelle phase de fonctionnement de cet équipement doit être interrompue afin de minimiser si possible l'amplitude du pic de consommation à venir au cours des phases de fonctionnement des différents équipements en fonctionnement.

Enfin, le module de traitement interrompt ladite au moins une phase de fonctionnement déterminée.

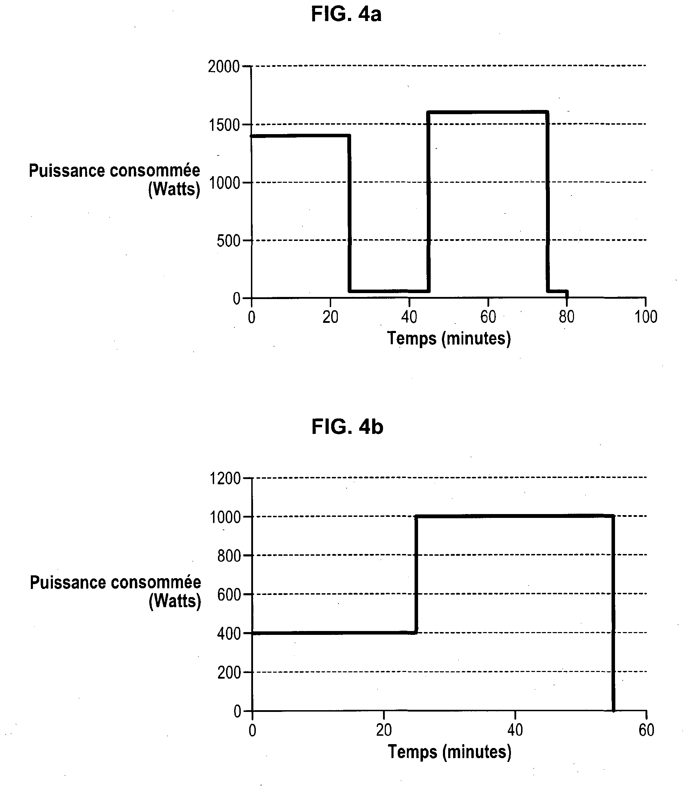

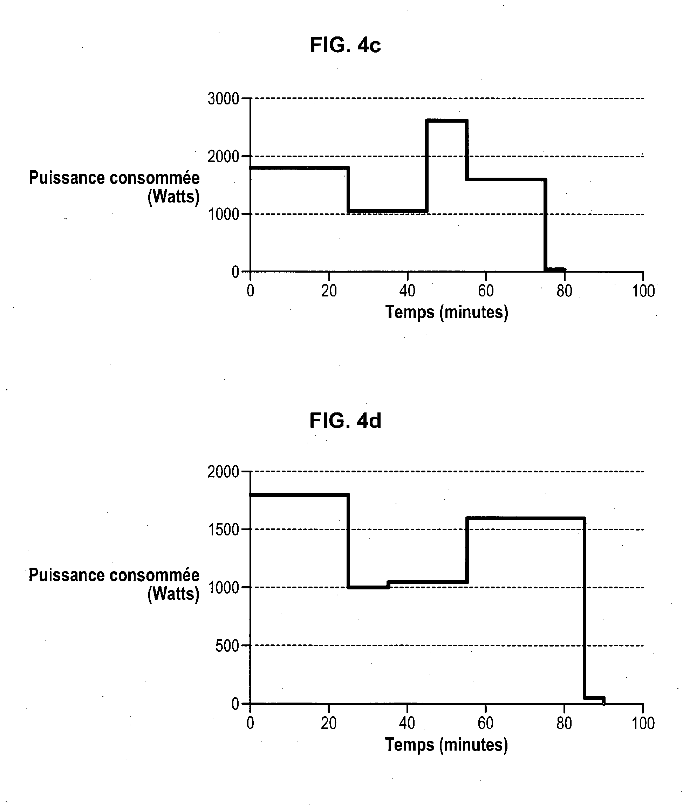

A titre d'exemple, les consommations électriques au cours des différentes phases de fonctionnement d'un lave-linge et d'un lave-vaisselle sont représentées respectivement en **figure 4a** et en **figure 4b****.** La consommation totale résultante des deux équipements est représentée en **figure 4c** et présente un pic de consommation de 2600 Watt après environ 50 minutes de fonctionnement des deux équipements. Ce pic résulte du cumul de la troisième phase du lave-vaisselle et de la deuxième phase du lave-linge, toutes deux fortement consommatrices de puissance électrique.

Le module de traitement détermine que la phase de fonctionnement à interrompre est la deuxième phase de fonctionnement du lave-vaisselle. En effet, bien que cette phase de fonctionnement présente une consommation faible, l'interruption de cette phase pendant 10 minutes permet d'attendre que la deuxième phase du lave-linge soit terminée avant de lancer la troisième phase du lave-vaisselle. Ainsi la consommation électrique des deux équipements au cours de ces phases ne se cumule plus et le pic de consommation de 2600 Watt précédemment déterminé est remplacé par une consommation maximale prévue de 1800 Watt en début de fonctionnement lors des premières phases de chacun des équipements, comme représenté en **figure 4d****.** La mise en œuvre du procédé a ainsi permis de diminuer la consommation maximale d'énergie de 30 % environ.

Selon un mode de mise en œuvre, les échanges d'informations entre les équipements domestiques et le module de traitement MT sur le réseau local LAN peuvent être réalisés par le biais du protocole UPnP (« Universal Plug 'n' Play »). Un tel protocole permet aux équipements de se connecter facilement au réseau et de partager sur le réseau des informations concernant notamment leurs phases de fonctionnement. Le module de traitement joue alors le rôle de point de contrôle UPnP et interagit avec les équipements par le biais des services et des actions UPnP proposés par ceux-ci. A titre d'exemple, les actions suivantes peuvent être proposées par chacun des équipements domestiques :
- GetPowerConsumption pour obtenir la consommation instantanée d'un équipement domestique,
- GetListOfCycles pour obtenir la consommation et la durée prévisionnelle de chacune des phases à venir d'un équipement domestique ainsi que la durée d'interruption maximale possible de chacune de ces phases,
- GetCurrentCyclelnfo pour obtenir des informations sur le statut de la phase de fonctionnement courante d'un équipement domestique (démarré, en pause, stoppé, démarrage forcé par l'utilisateur...) ainsi que le temps restant pour terminer la phase en cours,
- InterruptCycle afin de permettre au module de traitement d'interrompre la phase en cours d'un équipement.

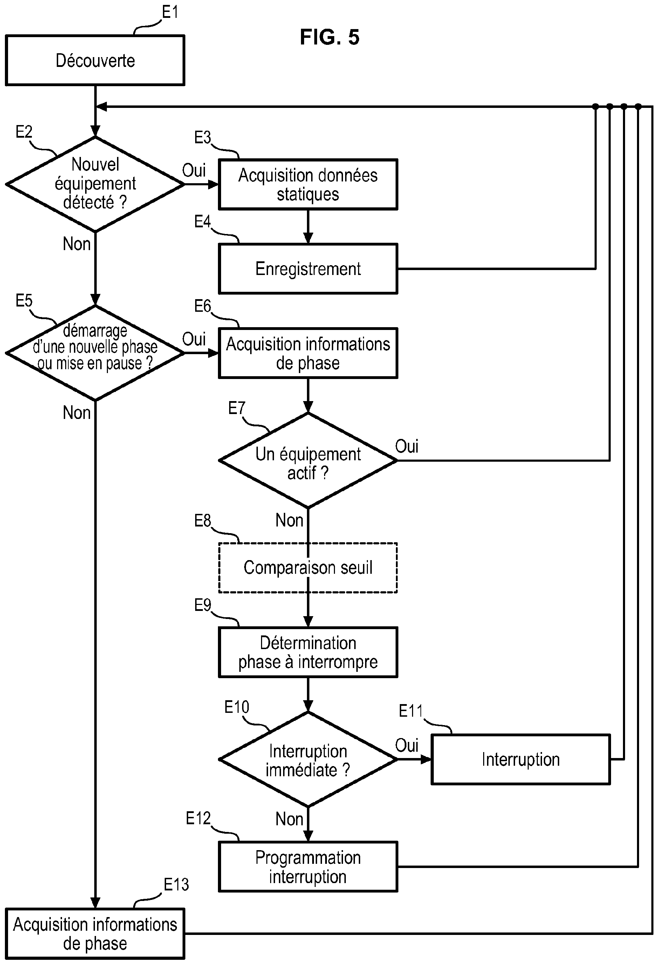

Plus précisément, et en référence à la **figure 5** illustrant une mise en œuvre du procédé selon l'invention, dans une première étape de découverte E1, le module de traitement MT réalise un processus de découverte des équipements domestiques D1 ,..,Dn connectés au réseau local de communication LAN.

Pour ceci, dans une première variante de mise en œuvre, le module de traitement MT peut recevoir des messages envoyés par chaque équipement domestique lors de sa connexion au réseau local LAN, par exemple lors de sa mise sous tension ou lors du lancement d'une phase de fonctionnement par un utilisateur. Un tel message peut comprendre une adresse URL permettant d'accéder à un fichier XML comprenant des données statiques permettant de donner une description de l'équipement domestique. Dans le cadre d'une mise en œuvre par le biais du protocole UPnP, ces messages peuvent être des messages SSDP (« Simple Service Discovery Protocol ») « alive » envoyés à une adresse multicast par les équipements domestiques. Un exemple d'un tel message envoyé par une machine à laver est donné en **annexe 1.**

Dans une deuxième variante de mise en œuvre, le module de traitement MT peut lancer lui-même un processus de découverte des équipements domestiques connectés au réseau local de communication. Un tel processus peut être lancé lors de la connexion du module de traitement au réseau afin de détecter les équipements qui y seraient déjà connectés, tout particulièrement dans le cas où les équipements domestiques restent connectés au réseau en permanence une fois sous tension. Le module de traitement envoie alors un message de requête sur le réseau, par exemple du type « M-SEARCH request » donné en **annexe 2.** En réponse à cette requête, les équipements domestiques s'identifient auprès du module de traitement en lui transmettant des messages.

Dans une deuxième étape de détection E2, à partir des messages reçus lors de la première étape E1, le module de traitement détermine si un nouvel équipement a été détecté.

Dans une troisième étape d'acquisition de données statiques E3, le module de traitement acquiert des données statiques fournies par les équipements domestiques nouvellement découverts. Le module de traitement peut accéder à ces données via l'adresse URL comprise dans le message transmis par ledit équipement domestique à la première étape de découverte décrite ci-dessus.

Ces données statiques donnent une description d'un équipement domestique et peuvent comprendre un numéro de série, le nom du fabricant, le modèle de l'équipement, un type d'équipement, une version de logiciel etc... Ceci permet au module de traitement de maintenir à jour un recensement des équipements connectés au réseau susceptibles de consommer de l'énergie et dont le module de traitement peut tenter d'interrompre une phase de fonctionnement pour minimiser le pic de consommation estimé. Une telle connaissance est nécessaire pour que le module de traitement sache quel équipement contacter lors des opérations d'interrogation d'équipement décrites ci-dessous.

Un exemple de fichier HTML accessible depuis l'adresse URL contenue dans le message « alive » transmis par une machine à laver et comprenant de telles données statiques est présenté en **annexe 3.**

Dans une quatrième étape d'enregistrement E4, le module de traitement peut envoyer à chaque nouvel équipement découvert un message de souscription afin qu'à l'avenir cet équipement notifie au module de traitement MT les événements le concernant tels que le démarrage, la mise en pause ou la fin d'une phase de fonctionnement. Le démarrage, la mise en pause ou la fin d'une phase est en effet un instant particulier au cours duquel la puissance consommée risque de changer et pendant lequel l'équipement concerné peut mettre à jour son estimation des durées et consommation des cycles à venir. La connaissance de ces événements par le module de traitement est donc nécessaire pour celui-ci puisse maintenir à jour ses prévisions de consommation et tenter de conserver un pic de consommation le plus réduit possible.

Un tel message de souscription peut contenir une adresse de réponse de type URL à laquelle l'équipement devra envoyer ses messages de notification pour prévenir le module de traitement de la survenance d'un événement. Un exemple de message de souscription est fourni en **annexe 4.**

Ces quatre étapes permettent au module de traitement d'avoir connaissance des équipements connectés au réseau et de demander à être prévenu des changements de phase de fonctionnement des équipements. Le module de traitement doit par ailleurs prendre connaissance des phases de fonctionnement de ces équipements et des consommations électriques associées.

Lors d'une cinquième étape de démarrage ou mise en pause E5, le module de traitement MT détermine qu'une nouvelle phase de fonctionnement a démarré sur un équipement domestique ou que l'utilisateur a mis en pause une des phases de fonctionnement. Le module de traitement MT peut réaliser cette détermination à la réception d'un message de notification envoyé par l'équipement domestique lui-même. Dans le cadre d'une mise en œuvre selon le protocole UPnP, un exemple de message de notification de type GENA est présenté en **annexe 5.** Le module de traitement peut recevoir ce message de notification après avoir transmis à l'équipement domestique une requête au fin de récupérer auprès de celui-ci des informations sur la phase de fonctionnement en cours sur cet équipement. Dans le cadre d'une mise en œuvre par le biais du protocole UPnP une telle requête peut être réalisée par le biais de l'action GetCurrentCyclelnfo décrite ci-dessus.

Lors d'une sixième étape d'acquisition d'informations de phase E6, le module de traitement acquiert des informations relatives à des phases de fonctionnement d'un équipement domestique après le démarrage d'une nouvelle phase de fonctionnement sur celui-ci ou la mise en pause d'une phase de fonctionnement, un tel démarrage ou mise en pause étant déterminé par le module de traitement lors de la cinquième étape de démarrage E5. Pour ce faire, le module de traitement interroge un équipement domestique pour lequel il a déterminé le démarrage d'une nouvelle phase de fonctionnement ou une mise en pause par l'utilisateur lors de la cinquième étape E5. Pour chacune de ses phases, l'équipement domestique peut indiquer la durée et la consommation électrique prévisionnelles de cette phase ainsi que la durée maximale d'interruption supportée par cette phase. Dans le cadre d'une mise en œuvre par le biais du protocole UPnP une telle interrogation peut être réalisée par le biais de l'action GetListOfCycle décrite ci-dessus. Ceci permet au module de traitement de disposer des informations nécessaires pour l'estimation d'un pic de consommation et sa minimisation.

Lors d'une septième étape de détermination du nombre d'équipements actifs E7, le module de traitement détermine si au moins deux équipements domestiques sont connectés au réseau local et consomment de l'énergie. Si le module de traitement détermine qu'un seul équipement domestique consomme de l'énergie, il ne peut minimiser le pic de consommation produit par cet équipement. En revanche si le module de traitement détermine qu'au moins deux équipements fonctionnent et consomment de l'énergie, il peut chercher à minimiser le pic de consommation produit par le fonctionnement simultané de ces au moins deux équipements.

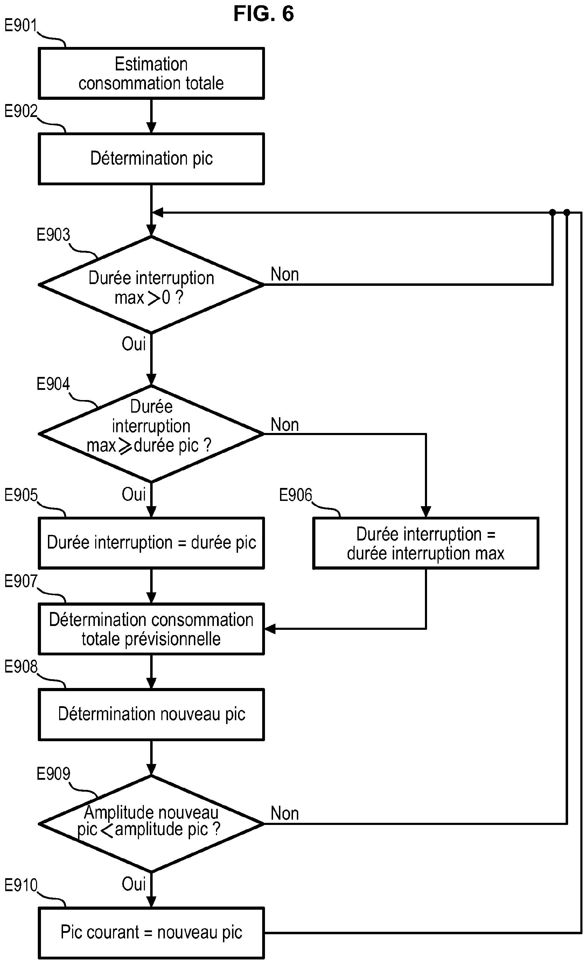

Lors d'une neuvième étape de détermination d'une phase de fonctionnement à interrompre E9, le module de traitement détermine au moins un équipement domestique et une phase de fonctionnement dudit au moins un équipement à interrompre afin de minimiser la puissance maximale totale consommée par les équipements en fonctionnement. Cette neuvième étape n'est mise en œuvre que si le module de traitement a déterminé qu'au moins deux équipements sont actifs lors de la septième étape de détermination du nombre d'équipements actifs. Selon une première variante, le module de traitement détermine une seule phase à interrompre. Cette variante de la neuvième étape sera détaillée par la suite en référence à la **figure 6****.** Selon une deuxième variante, le module de traitement peut chercher à minimiser le prix de consommation en interrompant plusieurs phases de fonctionnement.

Dans un mode de mise en œuvre, préalablement à la neuvième étape de détermination d'au moins une phase de fonctionnement à interrompre et lors d'une huitième étape de comparaison E8, le module de traitement de données peut comparer l'amplitude du pic de consommation à un seuil prédéterminé. Ce seuil peut être un seuil de consommation à ne pas dépasser fixé par un fournisseur de service. Le procédé de gestion de la consommation électrique décrit peut être mis en œuvre lorsque le pic de consommation atteint un pourcentage prédéterminé dudit seuil, par exemple 75 pourcents. Ceci permet de ne pas interrompre de phase si la consommation totale maximale reste suffisamment faible afin de ne pas retarder l'exécution des phases de fonctionnement sans réel besoin.

Lors d'une dixième étape d'interruption E10, le module de traitement détermine si la phase de fonctionnement à interrompre est en cours. Si c'est le cas le module interrompt immédiatement la phase de fonctionnement à interrompre lors d'une onzième étape d'interruption E11. Pour ce faire, le module de traitement commande à l'équipement concerné une interruption de la phase de fonctionnement à interrompre pendant une durée d'interruption déterminée lors de la neuvième étape comme décrit ci-dessous. Dans le cadre d'une mise en œuvre par le biais du protocole UPnP une telle action peut être réalisée par le biais de l'action InterruptCycle décrite ci-dessus. Un exemple de message d'interruption transmis par le module de traitement à un équipement domestique dont une phase de fonctionnement doit être interrompue est présenté en **annexe 6.** Ceci permet de diminuer instantanément la durée et/ou l'amplitude du pic de consommation.

Si la phase de fonctionnement à interrompre n'est pas en cours d'exécution, le module de traitement peut, lors d'une douzième étape de programmation d'interruption E12, programmer l'interruption de ladite au moins une phase de fonctionnement déterminée à un instant ultérieur, pour une durée d'interruption déterminée lors de la neuvième étape comme décrit ci-dessous. Ainsi le pic de consommation à éviter pourra être minimisé dès le lancement de la phase de fonctionnement qui aurait entraîné son apparition.

De plus, le module de traitement MT peut être configuré pour acquérir de manière répétée, lors d'une treizième étape d'acquisition E13, des informations relatives à des phases de fonctionnement en cours ou à venir des équipements domestiques connectés au sein du réseau. Cette acquisition répétée au fil du temps permet au module de traitement de mettre à jour les informations précédemment acquises relatives aux phases de fonctionnement d'un équipement. Celui-ci peut en effet mettre à jour au cours d'une phase de fonctionnement son estimation de la durée de cette phase et de la consommation énergétique durant cette phase. Par exemple au cours d'une phase de lavage d'un lave-linge, l'eau froide dont la température peut varier d'une phase de lavage à une autre doit d'abord être chauffée et la durée ainsi que la puissance consommée estimée pour ladite phase de lavage peuvent être mises à jour par le lave-linge une fois la température d'eau requise pour le lavage atteinte. Une telle acquisition répétée peut également permettre au module de traitement de tracer des histogrammes de suivi de la consommation de chaque équipement domestique. Ces histogrammes peuvent être ensuite affichés pour l'utilisateur. Dans le cadre d'une mise en œuvre par le biais du protocole UPnP une telle acquisition peut être réalisée par le biais des actions GetListOfCycle et GetPowerConsumption décrites ci-dessus.

Un exemple de mise en œuvre détaillé de la neuvième étape de détermination d'une phase de fonctionnement à interrompre est illustré en **figure 6****.**

Lors d'une première sous-étape E901 d'estimation de la consommation totale des équipements, le module de traitement estime la puissance électrique totale consommée au cours du temps par l'ensemble des équipements domestiques connectés au sein du réseau local à partir des informations acquises au cours des mises en œuvre précédentes de la sixième étape d'acquisition d'informations de consommation E6 et/ou de la treizième étape d'acquisition E13. Le module de traitement détermine ensuite l'amplitude du pic de consommation ainsi que sa durée lors d'une deuxième sous-étape E902. Le module de traitement a ainsi connaissance du pic à minimiser et peut ensuite déterminer une interruption de phase de fonctionnement permettant de minimiser ce pic.

Le module de traitement détermine ensuite pour chaque phase de fonctionnement de chaque équipement domestique si la durée d'interruption maximale de ladite phase de fonctionnement est supérieure à 0 lors d'une troisième sous-étape E903.

Si ce n'est pas le cas, la phase de fonctionnement dudit équipement domestique ne peut être interrompue et le module de traitement doit chercher une autre phase à interrompre.

A l'inverse, si ladite phase de fonctionnement peut être interrompue, le module de traitement peut envisager d'interrompre ladite phase de fonctionnement pendant une durée d'interruption inférieure ou égale à la durée maximale d'interruption.

Dans une variante de mise en œuvre illustrée sur la figure 6, le module de traitement détermine lors d'une quatrième sous-étape E904 si la durée d'interruption maximale est supérieure ou égale à la durée du pic de consommation.

Si la durée d'interruption maximale est supérieure ou égale à la durée du pic de consommation, le module de traitement peut envisager lors d'une cinquième sous-étape E905 selon une première variante représentée en figure 6, d'interrompre ladite phase de fonctionnement pendant une durée d'interruption égale à la durée du pic de consommation. La consommation d'énergie sera ainsi diminuée pendant la totalité de la durée du pic déterminé initialement et l'amplitude de ce pic est donc diminuée. Selon une deuxième variante non représentée, le module de traitement peut envisager d'interrompre ladite phase de fonctionnement déterminée pendant une durée d'interruption volontairement inférieure ou égale à la durée du pic de consommation bien que celle-ci soit inférieure à la durée maximale d'interruption. Une telle variante peut être appliquée lors d'une tentative de minimisation du pic de consommation tirant parti de l'interruption de plusieurs phases de fonctionnement, susceptible de minimiser davantage le pic de consommation.

Si la durée d'interruption maximale est inférieure à la durée du pic de consommation, le module de traitement peut envisager, lors d'une sixième sous-étape E906, selon une première variante représentée en **figure 6****,** d'interrompre ladite phase de fonctionnement pendant une durée d'interruption égale à la durée maximale d'interruption. Ceci permet de raccourcir la durée du pic de consommation, autant qu'il soit possible de le faire sans dégrader la qualité du service rendu par l'équipement dont la phase de fonctionnement est interrompue. Selon une deuxième variante non représentée, le module de traitement peut envisager d'interrompre ladite phase de fonctionnement pendant une durée d'interruption volontairement inférieure à la durée maximale d'interruption et à la durée du pic de consommation, par exemple dans le cas d'une interruption de plusieurs phases de fonctionnement.

Lors d'une septième sous-étape E907, le module de traitement détermine la nouvelle consommation totale prévisionnelle de l'ensemble des équipements en tenant compte de l'au moins une interruption de phase envisagée lors des cinquième ou sixième sous-étapes.

Lors d'une huitième sous-étape E908, le module de traitement détermine l'amplitude et la durée du nouveau pic de consommation.

Lors d'une neuvième sous-étape E909, le module de traitement détermine si le nouveau pic de consommation possède une amplitude inférieure à celle de l'ancien pic de consommation. Si c'est le cas, l'interruption envisagée, c'est à dire la phase à interrompre et la durée d'interruption, est mémorisée et le nouveau pic de consommation est conservé comme pic de consommation courant lors d'une dixième sous-étape E910. Le module de traitement met ensuite en œuvre les troisième à dixième sous-étapes pour une nouvelle phase de fonctionnement de l'équipement domestique ou d'un nouvel équipement domestique.

Lorsque le module de traitement a réalisé les troisième à dixième sous-étapes pour l'ensemble des phases de fonctionnement de la pluralité d'équipements domestiques connectés au sein du réseau local, le module de traitement de données retient la dernière interruption mémorisée comme interruption optimale. Le module de traitement a ainsi déterminé l'au moins une phase de fonctionnement dudit équipement domestique à interrompre ainsi que l'instant et la durée de l'interruption de cette phase de fonctionnement de sorte à minimiser le pic de consommation.

Lors de la onzième ou douzième étape, le module de traitement peut ainsi interrompre la phase de fonctionnement à interrompre pendant une durée d'interruption inférieure ou égale à la durée maximale d'interruption, éventuellement égale à la durée du pic de consommation lorsque la durée maximale d'interruption est supérieure ou égale à la durée du pic de consommation, ou bien égale à la durée maximale d'interruption lorsque celle-ci est inférieure à la durée du pic de consommation. Ceci permet de minimiser autant que possible le pic de consommation, dans le respect des durées maximales d'interruption des phases de fonctionnement garantissant une absence de dégradation du service rendu par les équipements.

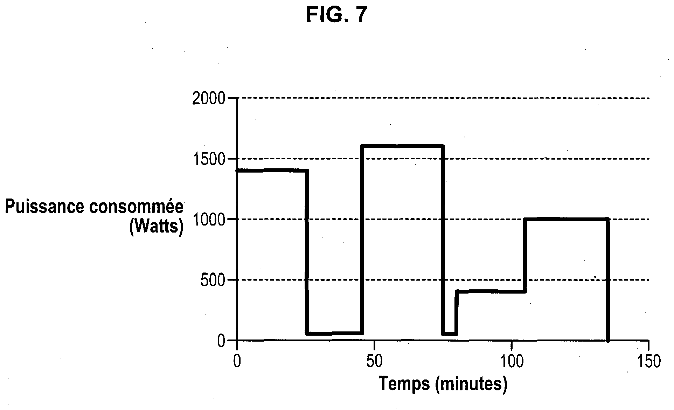

Dans un mode de mise en œuvre, lors de la neuvième étape, le module de traitement de données peut déterminer au moins une phase de fonctionnement d'un desdits équipements à interrompre de sorte à faire un compromis entre la diminution du pic de consommation et le décalage dans le temps des différents programmes, par exemple pour minimiser la durée d'interruption des phases de fonctionnement des équipements domestiques. Ce compromis peut être paramétré par l'utilisateur, l'opérateur, ou par un algorithme d'apprentissage. En reprenant l'exemple illustré en **figures 4a, 4b****,** **4c et 4d****,** si l'utilisateur privilégie la minimisation de l'amplitude de consommation au détriment de la durée d'interruption, le module de traitement peut décider de démarrer séquentiellement la machine à laver puis le lave-vaisselle, ou l'inverse, afin que le pic de consommation ne dépasse pas 1600 Watt comme illustré en figure 7. Néanmoins la fin du programme de la machine à laver sera alors décalée de 80 minutes ou la fin du programme du lave-vaisselle sera alors décalée de 55 minutes.

Enfin, dans un autre mode de mise en œuvre, le module de traitement de données MT peut déterminer au moins une phase de fonctionnement d'un desdits équipements à interrompre lors de la neuvième étape E9 en fonction de la segmentation heures pleines et heures creuses. Ce mode de mise en œuvre permet de prendre en compte lors de la détermination des phases de fonctionnement à interrompre les basculements de tarif de l'énergie afin de minimiser le coût de l'énergie totale consommée pour l'utilisateur.

### Annexes

**Annexe 1**

| |
|---|
| NOTIFY * HTTP/1.1 |
| HOST: 239.255.255.250:1900 |
| CACHE-CONTROL: max-age = seconds until advertisement expires |
| LOCATION: URL for UPnP description for root device |
| NT: **urn:schemas-upnp-org:device:Washer:1** |
| NTS: ssdp:alive |
| SERVER: OS/version UPnP/1.0 product/version |
| USN: advertisement UUID |

**Annexe 2**

| |
|---|
| M-SEARCH * HTTP/1.1 |
| HOST: 239.255.255.250:1900 |
| MAN: "ssdp:discover" |
| MX: seconds to delay response |
| ST: **urn:schemas-upnp-org:device:Washer:1** |

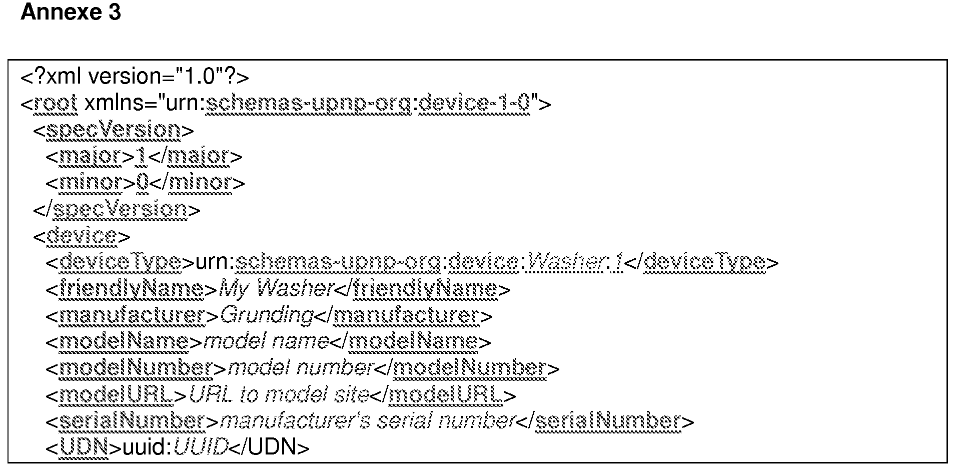

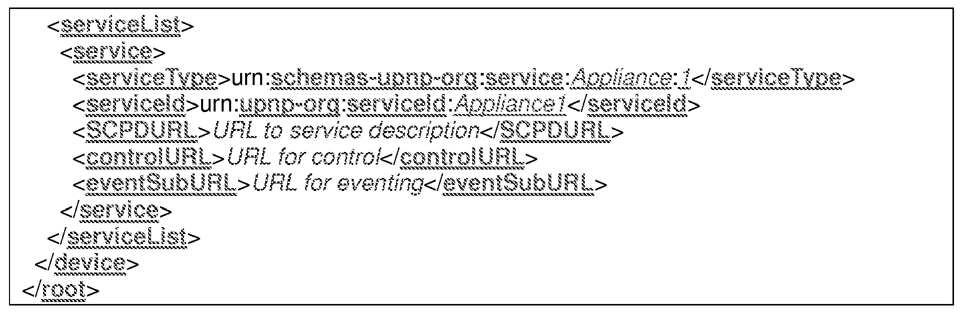

**Annexe 4**

| |
|---|
| SUBSCRIBE publisher path HTTP/1.1 |
| HOST: publisher host:publisher port |
| CALLBACK: <delivery URL> |
| NT: upnp:event |
| TIMEOUT: Second-requested subscription duration |

**Annexe 5**

| |
|---|
| NOTIFY delivery path HTTP/1.1 |
| HOST: delivery host:delivery port |
| CONTENT-TYPE: text/xml |
| CONTENT-LENGTH: Bytes in body |
| NT: upnp:event |
| NTS: upnp:propchange |
| SID: uuid:subscription-UUID |
| SEQ: event key |
| ```
 <?xml version="1.0"?>
 <e:propertyset xmlns:e="urn:schemas-upnp-org:event-1-0">
 <e:property>
 <CycleStatus>STARTED_BY_USER</CycleStatus>
 </e:property>
 </e:propertyset>
``` |

**Annexe 6**

| |
|---|
| POST path of control URL HTTP/1.1 |
| HOST: host of control URL:port of control URL |
| CONTENT-LENGTH: bytes in body |
| CONTENT-TYPE: text/xml; charset="utf-8" |
| SOAPACTION: "urn:schemas-upnp-org:service:Appliance:1#InterruptCycle" |
| ```
 <?xml version="1.0"?>
 <s:Envelope
 xmlns:s="http://schemas.xmlsoap.org/soap/envelope/"
 s:encodingStyle="http://schemas.xmlsoap.org/soap/encoding/">
 <s:Body>
 <u:lnterruptCycle xmlns:u="urn:schemas-upnp-org:Appliance:InterruptCycle:1">
 <InterruptionDelay>in arg value</lnterruptionDelay>
 </u:InterruptCycle>
 </s:Body>
 </s:Envelope>
``` |

## Revendications

1. Procédé de gestion de la consommation électrique d'une pluralité d'équipements domestiques (D1,..Dn) connectés au sein d'un réseau de communication local (LAN),
le fonctionnement d'au moins deux équipements domestiques présentant une ou plusieurs phases de fonctionnement,
ledit procédé comprenant les étapes suivantes mises en œuvre par un module de traitement de données (MT) susceptible d'être connecté au réseau de communication local (LAN):
- acquisition (E6, E13) d'informations relatives à des phases de fonctionnement en cours ou à venir pour au moins deux équipements domestiques,
les informations relatives à une phase de fonctionnement pour un équipement domestique comprenant la puissance consommée par ledit équipement domestique durant cette phase,
ledit procédé étant **caractérisé par** les étapes suivantes mises en œuvre par le module de traitement de données (MT) :
- détermination (E9) en fonction des informations acquises, d'au moins une phase de fonctionnement d'un desdits équipements à interrompre de sorte à faire un compromis entre une diminution de la puissance maximale totale consommée par lesdits au moins deux équipements domestiques, dite pic de consommation et le décalage dans le temps des phases de fonctionnement des équipements domestiques, de sorte à minimiser la durée d'interruption des phases de fonctionnement des équipements domestiques,
- interruption (E11, E12) de ladite phase de fonctionnement déterminée.

2. Procédé selon la revendication 1, dans lequel le module de traitement acquiert (E6) les informations relatives à des phases de fonctionnement en cours ou à venir d'équipements domestiques, après le démarrage par un desdits équipements domestiques d'une nouvelle phase de fonctionnement ou la mise en pause par un utilisateur d'une phase de fonctionnement.

3. Procédé selon l'une des revendications précédentes, dans lequel le module de traitement de données acquiert (E13) de manière répétée les informations relatives à des phases de fonctionnement d'équipements domestiques.

4. Procédé selon l'une des revendications précédentes, dans lequel les informations relatives à une phase de fonctionnement d'un équipement domestique comprennent une durée maximale d'interruption de ladite phase et dans lequel ledit module de traitement interrompt ladite phase de fonctionnement déterminée pendant une durée d'interruption inférieure ou égale à la durée maximale d'interruption.

5. Procédé selon la revendication précédente, dans lequel ledit module de traitement interrompt (E11, E12) ladite phase de fonctionnement déterminée pendant une durée d'interruption égale à la durée du pic de consommation lorsque la durée maximale d'interruption est supérieure ou égale à la durée du pic de consommation.

6. Procédé selon l'une des revendications 4 ou 5, dans lequel ledit module de traitement interrompt (E11, E12) ladite phase de fonctionnement déterminée pendant une durée d'interruption égale à la durée maximale d'interruption lorsque la durée d'interruption maximale est inférieure à la durée du pic de consommation.

7. Procédé selon l'une des revendications précédentes, dans lequel préalablement à l'étape de détermination d'au moins une phase de fonctionnement à interrompre (E9), le module de traitement de données compare l'amplitude du pic de consommation à un seuil prédéterminé (E8).

8. Procédé selon l'une des revendications précédentes, dans lequel le module de traitement programme (E12) l'interruption de ladite phase de fonctionnement à un instant ultérieur.

9. Module de traitement de données (MT) susceptible d'être connecté à un réseau de communication local (LAN) et configuré pour :
- acquérir des informations relatives à des phases de fonctionnement en cours ou à venir pour au moins deux équipements domestiques (D1,..Dn) connectés au sein du réseau de communication local et fonctionnant selon plusieurs phases de fonctionnement,
lesdites informations relatives à une phase de fonctionnement pour un équipement domestique comprenant la puissance consommée par ledit équipement domestique durant cette phase,
- déterminer en fonction des informations acquises, au moins une phase de fonctionnement d'un desdits équipements à interrompre de sorte à faire un compromis entre une diminution de la puissance maximale totale consommée par lesdits au moins deux équipements domestiques, dite pic de consommation et le décalage dans le temps des phases de fonctionnement des équipements domestiques, de sorte à minimiser la durée d'interruption des phases de fonctionnement des équipements domestiques,
- interrompre ladite phase de fonctionnement déterminée.

10. Passerelle (GW) comprenant un module de traitement de données selon la revendication précédente.

11. Système de gestion de la consommation électrique comprenant une pluralité d'équipements domestiques (D1,..Dn) connectés au sein d'un réseau de communication local (LAN) et une passerelle (GW) selon la revendication précédente.

12. Produit programme d'ordinateur comprenant des instructions de code pour l'exécution d'un procédé de gestion de la consommation électrique d'une pluralité d'équipements domestiques selon l'une quelconque des revendications 1 à 8 lorsque ce programme est exécuté par un processeur.

## Patentansprüche

1. Verfahren zur Verwaltung des Stromverbrauchs mehrerer Haushaltsgeräte (D1, ..., Dn), die in einem lokalen Netzwerk (LAN) verbunden sind,
wobei der Betrieb von wenigstens zwei Haushaltsgeräten eine oder mehrere Betriebsphasen aufweist,
wobei das Verfahren die folgenden Schritte umfasst, die von einem Datenverarbeitungsmodul (MT) ausgeführt werden, das mit dem lokalen Netzwerk (LAN) verbindbar ist:
- Erfassung (E6, E13) von Informationen in Bezug auf Betriebsphasen, die im Gange sind oder bevorstehen, für wenigstens zwei Haushaltsgeräte, wobei die Informationen in Bezug auf eine Betriebsphase für ein Haushaltsgerät die von dem Haushaltsgerät während dieser Phase aufgenommene Leistung umfassen,
wobei das Verfahren durch die folgenden Schritte gekennzeichnet ist, die von dem Datenverarbeitungsmodul (MT) ausgeführt werden:
- Bestimmung (E9), in Abhängigkeit von den erfassten Informationen, wenigstens einer Betriebsphase eines der Geräte, die zu unterbrechen ist, um einen Kompromiss zwischen einer Verringerung der von den wenigstens zwei Haushaltsgeräten aufgenommenen gesamten maximalen Leistung, Verbrauchsspitze genannt, und der zeitlichen Verschiebung der Betriebsphasen der Haushaltsgeräte einzugehen, so dass die Unterbrechungsdauer der Betriebsphasen der Haushaltsgeräte minimiert wird,
- Unterbrechung (Ell, E12) der bestimmten Betriebsphase.

2. Verfahren nach Anspruch 1, wobei das Verarbeitungsmodul die Informationen in Bezug auf im Gang befindliche oder bevorstehende Betriebsphasen von Haushaltsgeräten nach dem Starten einer neuen Betriebsphase durch eines der Haushaltsgeräte oder dem Bewirken einer Pause einer Betriebsphase durch einen Benutzer erfasst (E6) .

3. Verfahren nach einem der vorhergehenden Ansprüche, wobei das Datenverarbeitungsmodul die Informationen in Bezug auf Betriebsphasen von Haushaltsgeräten wiederholt erfasst (E13).

4. Verfahren nach einem der vorhergehenden Ansprüche, wobei die Informationen in Bezug auf eine Betriebsphase eines Haushaltsgeräts eine maximale Unterbrechungsdauer dieser Phase umfassen, und wobei das Verarbeitungsmodul die bestimmte Betriebsphase während einer Unterbrechungsdauer unterbricht, die kleiner oder gleich der maximalen Unterbrechungsdauer ist.

5. Verfahren nach dem vorhergehenden Anspruch, wobei das Verarbeitungsmodul die bestimmte Betriebsphase während einer Unterbrechungsdauer unterbricht (Ell, E12), die gleich der Dauer der Verbrauchsspitze ist, wenn die maximale Unterbrechungsdauer größer oder gleich der Dauer der Verbrauchsspitze ist.

6. Verfahren nach einem der Ansprüche 4 oder 5, wobei das Verarbeitungsmodul die bestimmte Betriebsphase während einer Unterbrechungsdauer unterbricht (Ell, E12), die gleich der maximalen Unterbrechungsdauer ist, wenn die maximale Unterbrechungsdauer kleiner als die Dauer der Verbrauchsspitze ist.

7. Verfahren nach einem der vorhergehenden Ansprüche, wobei vor dem Schritt der Bestimmung wenigstens einer zu unterbrechenden Betriebsphase (E9) das Datenverarbeitungsmodul die Amplitude der Verbrauchsspitze mit einem vorbestimmten Schwellenwert vergleicht (E8).

8. Verfahren nach einem der vorhergehenden Ansprüche, wobei das Verarbeitungsmodul die Unterbrechung der Betriebsphase zu einem späteren Zeitpunkt programmiert (E12).

9. Datenverarbeitungsmodul (MT), welches mit einem lokalen Netzwerk (LAN) verbindbar ist und ausgelegt ist zum:
- Erfassen von Informationen in Bezug auf Betriebsphasen, die im Gange sind oder bevorstehen, für wenigstens zwei Haushaltsgeräte (D1, ..., Dn), die in dem lokalen Netzwerk verbunden sind und gemäß mehreren Betriebsphasen arbeiten,
wobei die Informationen in Bezug auf eine Betriebsphase für ein Haushaltsgerät die von dem Haushaltsgerät während dieser Phase aufgenommene Leistung umfassen,
- Bestimmen, in Abhängigkeit von den erfassten Informationen, wenigstens einer Betriebsphase eines der Geräte, die zu unterbrechen ist, um einen Kompromiss zwischen einer Verringerung der von den wenigstens zwei Haushaltsgeräten aufgenommenen gesamten maximalen Leistung, Verbrauchsspitze genannt, und der zeitlichen Verschiebung der Betriebsphasen der Haushaltsgeräte einzugehen, so dass die Unterbrechungsdauer der Betriebsphasen der Haushaltsgeräte minimiert wird,
- Unterbrechen der bestimmten Betriebsphase.

10. Gateway (GW), welches ein Datenverarbeitungsmodul nach dem vorhergehenden Anspruch umfasst.

11. System zur Verwaltung des Stromverbrauchs, welches mehrere Haushaltsgeräte (D1, ..., Dn), die in einem lokalen Netzwerk (LAN) verbunden sind, und ein Gateway (GW) nach dem vorhergehenden Anspruch umfasst.

12. Computerprogrammprodukt, welches Codeanweisungen zur Ausführung eines Verfahrens zur Verwaltung des Stromverbrauchs mehrerer Haushaltsgeräte nach einem der Ansprüche 1 bis 8, wenn dieses Programm von einem Prozessor ausgeführt wird, umfasst.

## Claims

1. Method for managing the electricity consumption of a plurality of domestic equipments (D1,..Dn) connected within a local area communication network (LAN),
the operation of at least two domestic equipments having one or more operating phases,
said method comprising the following steps implemented by a data processing module (MT) able to be connected to the local area communication network (LAN):
- acquiring (E6, E13) information relating to current or upcoming operating phases for at least two domestic equipments,
the information relating to an operating phase for a domestic equipment comprising the power consumed by said domestic equipment during this phase,
said method being **characterized by** the following steps implemented by the data processing module (MT):
- on the basis of the acquired information, determining (E9) at least one operating phase of one of said equipments to be interrupted so as to draw a compromise between reducing the total maximum power consumed by said at least two domestic equipments, called consumption peak, and shifting the operating phases of the domestic equipments in time so as to minimize the duration of the interruption of the operating phases of the domestic equipments,
- interrupting (Ell, E12) said determined operating phase.

2. Method according to Claim 1, wherein the processing module acquires (E6) the information relating to current or upcoming operating phases of domestic equipments after one of said domestic equipments has started a new operating phase or a user has paused an operating phase.

3. Method according to either of the preceding claims, wherein the data processing module repeatedly acquires (E13) the information relating to operating phases of domestic equipments.

4. Method according to one of the preceding claims, wherein the information relating to an operating phase of a domestic equipment comprises a maximum interruption duration of said phase and wherein said processing module interrupts said determined operating phase for an interruption duration less than or equal to the maximum interruption duration.

5. Method according to the preceding claim, wherein said processing module interrupts (Ell, E12) said determined operating phase for an interruption duration equal to the duration of the consumption peak when the maximum interruption duration is greater than or equal to the duration of the consumption peak.

6. Method according to either of Claims 4 and 5, wherein said processing module interrupts (Ell, E12) said determined operating phase for an interruption duration equal to the maximum interruption duration when the maximum interruption duration is less than the duration of the consumption peak.

7. Method according to one of the preceding claims, wherein, prior to the step of determining at least one operating phase to be interrupted (E9), the data processing module compares the amplitude of the consumption peak with a predetermined threshold (E8).

8. Method according to one of the preceding claims, wherein the processing module programs (E12) the interruption of said operating phase at a later time.

9. Data processing module (MT) able to be connected to a local area communication network (LAN) and configured so as to:
- acquire information relating to current or upcoming operating phases for at least two domestic equipments (D1,..Dn) connected within the local area communication network and operating in a plurality of operating phases, said information relating to an operating phase for a domestic equipment comprising the power consumed by said domestic equipment during this phase,
- on the basis of the acquired information, determine at least one operating phase of one of said equipments to be interrupted so as to draw a compromise between reducing the total maximum power consumed by said at least two domestic equipments, called consumption peak, and shifting the operating phases of the domestic equipments in time so as to minimize the duration of the interruption of the operating phases of the domestic equipments,
- interrupt said determined operating phase.

10. Gateway (GW) comprising a data processing module according to the preceding claim.

11. Electricity consumption management system comprising a plurality of domestic equipments (D1,..Dn) connected within a local area communication network (LAN) and a gateway (GW) according to the preceding claim.

12. Computer program product comprising code instructions for executing a method for managing the electricity consumption of a plurality of domestic equipments according to any one of Claims 1 to 8 when this program is executed by a processor.
